# NEUE EUROPÄISCHE PATENTSCHRIFT

(11) **EP 2 647 966 B2**
(45) Veröffentlichungstag und Bekanntmachung des Hinweises auf die Entscheidung über den Einspruch: **23.08.2017**
(45) Hinweis auf die Patenterteilung: 04.06.2014
(21) Anmeldenummer: 12163172.5
(22) Anmeldetag: 04.04.2012
(51) Int. Cl.: G01D 5/347, G01D 5/32

(54) **Messwertgeber zum Erhalt einer Positionsinformation und Verfahren zu dessen Betrieb**
Data encoder for receiving position information and method for operating same
Dispositif d'établissement de valeurs de mesure pour obtenir une information de position et son procédé de fonctionnement

(43) Veröffentlichungstag der Anmeldung: 09.10.2013
(73) Patentinhaber: Siemens Aktiengesellschaft, 80333 München (DE)
(72) Erfinder: Zettner, Jürgen, 90587 Veitsbronn (DE); Schimmer, Jürgen, 90473 Nürnberg (DE); Wetzel, Ulrich, 91325 Adelsdorf (DE)

(56) Entgegenhaltungen:
- EP-A1- 0 010 862
- EP-A1- 0 010 862
- EP-A2- 0 058 302
- DE-A1- 2 944 363
- GB-A- 2 130 364
- GB-A- 2 131 364
- US-A1- 2006 092 047
- US-A1- 2006 092 047
- US-A1- 2011 127 788
- US-A1- 2011 127 788

## Beschreibung

Die Erfindung betrifft einen ansonsten mitunter auch nur kurz als Geber oder Drehgeber bezeichneten Messwertgeber zum Erhalt einer Positionsinformation sowie ein Verfahren zum Betrieb eines Messwertgebers. Solche Messwertgeber sind an sich bekannt. Exemplarisch kann auf sogenannte Absolut- oder Inkrementalgeber verwiesen werden.

Die Erfindung betrifft im Weiteren auch ein Aggregat mit einem solchen Messwertgeber, also zum Beispiel einen Antrieb oder einen Elektromotor, um dort als Positionsinformation eine Information in Bezug auf eine Geschwindigkeit oder Lage des Motors/Antriebs oder allgemein des jeweiligen Aggregats zu erhalten.

Der hier zu beschreibende Messwertgeber basiert auf einer optischen Abtastung einer Maßverkörperung. Dies ist zum Beispiel bei Absolut- oder Inkrementalgebern ebenfalls bekannt und exemplarisch kann auf die EP 512 864 A verwiesen werden.

Die EP 1 677 081 B1 schlägt für eine optische Abtastung die Verwendung einer diffraktiv wirkenden Maßverkörperung für einen Messwertgeber zum Erhalt einer Positionsinformation vor.

Messwertgeber, speziell Messwertgeber für die Antriebstechnik, unterliegen besonders hohen Anforderungen an deren Betriebs- und Ausfallsicherheit.

Für Drehgeber auf Basis einer mikrostrukturell angelegten diffraktiv optischen Absolutcodierung, wie dies zum Beispiel in der oben genannten EP 1 677 081 B1 beschrieben ist, sind Halbleiter-Lichtquellen, also zum Beispiel Laserdioden, erforderlich, deren Lebensdauer und Betriebsfestigkeit entscheidend von den maximalen und minimalen Betriebstemperaturen beeinflusst wird. Dies liegt zum einen an einer Wechselbelastung aufgrund von Temperaturschwankungen beim wiederholten Aktivieren und Deaktivieren solcher Lichtquellen und zum anderen an Diffusionsvorgängen, wie sie sich bei hohen Temperaturen ergeben, und dabei unerwünscht zu Dotierungen, Kristallschäden und dergleichen führen. Ebenso hohen Anforderungen bei der Anwendung zum Beispiel bei einem motorintegrierten Drehgeber unterliegen dabei das sogenannte Packaging wie auch die Aufbau- und die Verbindungstechnik.

Damit ist die Eignung solcher Messwertgeber für den industriellen Einsatz, speziell wenn es darum geht, besondere Anforderungen an deren Verlässlichkeit im Dauerbetrieb zu erfüllen, bisher noch nicht optimal.

Eine Aufgabe der Erfindung besteht darin, einen Messwertgeber und ein Verfahren zu dessen Betrieb anzugeben, der bzw. das die oben genannten Nachteile vermeidet oder zumindest reduziert.

Diese Aufgabe wird erfindungsgemäß mit einem Messwertgeber zum Erhalt einer Positionsinformation, tatsächlich bereits mit einer Sende- Empfangseinheit eines solchen Messwertgebers, mit den Merkmalen des Anspruchs 1 gelöst. Dazu ist bei einem Messwertgeber zum Erhalt einer Positionsinformation, wobei der Messwertgeber eine Sende-/ Empfangseinheit zur Abtastung einer Maßverkörperung umfasst, vorgesehen, dass die Sende- / Empfangseinheit zumindest eine Lichtquelle mit jeweils einer Mehrzahl von Emittern, umfasst und dass einzelne oder mehrere Emitter automatisch anstelle einzelner oder mehrerer anderer Emitter aktivierbar sind. Als Lichtquelle oder als Emitter kommen dabei Halbleiterlaser in Betracht. Als Lichtquelle wird hier und im Folgenden auch eine mehrere derartige Emitter umfassende Einheit bezeichnet, in welcher jeder Emitter als eigenständige potentielle Lichtquelle fungiert. Derzeit werden solche Halbleiterlaser, insbesondere VCSEL Laser (VCSEL Emitter), nicht für einen industriellen Einsatz bei hohen Temperaturen ausgelegt. Bei einer Verwendung solcher Halbleiterlaser werden die einzelnen Emitter üblicherweise auch einzeln platziert. Aus der Kommunikationstechnik und für die Laserbeleuchtung sowie zur Erhöhung einer Gesamtstrahlungsleistung sind VCSEL-Arrays bekannt.

Die oben genannte Aufgabe wird ebenfalls mit einem Verfahren zum Betrieb eines solchen Messwertgebers mit den Merkmalen des ersten unabhängigen Verfahrensanspruchs gelöst. Dazu ist bei einem Verfahren zum Betrieb eines Messwertgebers vorgesehen, dass mehrere Emitter gleichzeitig aktiviert werden oder einzelne Emitter als Ersatz anderer Emitter oder als Ergänzung zu anderen Emittern aktiviert werden.

Der Vorteil der Erfindung besteht darin, dass bei einer Lichtquelle mit mehreren Laserdioden, insbesondere mehreren integrierten VCSEL Emittern, diese in verschiedener Weise nutzbar sind, um die Toleranz des mechanischen Aufbaus des Messwertgebers und/oder um die Zuverlässigkeit durch Redundanz erhöhen. Zudem ist dies vorteilhaft in relativ kostengünstiger Art und Weise möglich. Darüber hinaus ermöglicht die Zusammenfassung oder Integration mehrerer Laseremitter aber entscheidende Vorteile hinsichtlich der mechanischen Toleranz und Betriebssicherheit.

Eine Mehrzahl von Emittern ist im Stand der Technik durchaus bekannt, ohne dass allerdings eine solche Mehrzahl unter dem Gesichtspunkt einer Redundanz vorgesehen wäre. In der EP 0 010 862 A befinden sich mehrere LEDs in unterschiedlichen Parallelzweigen einer Lichtquelle. Zum Zwecke eines gleichen Spannungsabfalls in allen Parallelzweigen wird eine Dummy LED verwendet, damit in allen Parallelzweigen eine gleiche Anzahl von LED vorhanden ist. In der GB 2 130 364 A wird ein Messwertgeber mit zwei Lichtquellen, die jeweils durch ein Array gleichmäßig beabstandeter LEDs gebildet sind, beschrieben. Die Lichtquellen werden alternierend aktiviert und je nach Position einer vor den Lichtquellen beweglichen Schlitzplatte teilweise von diesen abgeschattet. Die Positionsinformation soll sich anhand einer von einem den Lichtquellen gegenüberliegenden Detektor messbaren Lichtmenge ergeben, so dass hinsichtlich der zu einem Array zusammengefassten LEDs keine Redundanz besteht, denn bei einem Ausfall einer LED in einem solchen Array sinkt die abgestrahlte und damit auch die erfassbare Lichtmenge und dies führt damit zu einem Positionsfehler. Weitere Dokumente zum Stand der Technik, die ebenfalls eine Mehrzahl von LEDs aufweisen, ohne dass damit eine Redundanz verbunden wäre, sind die US 2006/0092047 A und die US 2011/0127788 A.

Bei einem eventuellen Ausfall eines jeweils bestmöglichen Emitters ist an dessen Stelle die Verwendung eines anderen Emitters, insbesondere in einer Reihenfolge einer in Bezug auf eine resultierende Signalgüte nächstbesten Eignung, möglich, so dass sich eine Redundanz ergibt und der Messwertgeber auch bei einem Ausfall eines Emitters und selbst bei einem sukzessiven Ausfall mehrerer Emitter noch verwendbar ist. Ein bestmöglicher Emitter ist dabei ein Emitter, bei dessen Aktivierung sich aufgrund des von diesem ausgesandten Abtaststrahls ein bestmögliches Bild ergibt.

Eine Erhöhung einer Lebensdauer des Messwertgebers, also eine Erhöhung von dessen Verwendbarkeit im Betrieb, lässt sich durch eine gezielte Abfolge der Verwendung (Aktivierung) der einzelnen integrierten Laseremitter erreichen. Dadurch wird eine resultierende Gesamteinschaltdauer auf die genutzten Emitter verteilt. Bei einer symbolisch mit N bezeichneten Anzahl verwendbarer Emitter lässt sich die Lebensdauer des Messwertgebers theoretisch um den Faktor N steigern.

Die integrierten Emitter können darüber hinaus gezielt zur zeitweisen Erhöhung der Gesamtstrahlungsintensität genutzt werden, insbesondere dann, wenn Sie nur radial versetzt das gleiche Hologramm abbilden (abtasten) und die Lage der abgebildeten Bitmuster sich um wenige Pixel unterscheidet (einzige Voraussetzung ist dabei einerseits eine gleiche Bitinformation aus 1 bis N Pixeln mit einer Mindestsignalhöhe sowie eine klare Bittrennung mit einem ausreichenden Abstand zum nächsten Bit bestehend aus ebenfalls N Pixeln). Somit kann auch bei höheren Betriebstemperaturen noch ausreichend Leistung zum Auslesen der Maßverkörperung, also zum Beispiel der Absolutspur, erzeugt werden und zum Beispiel eine teilweise Verschmutzung von als Maßverkörperung fungierenden, computergenerierten Hologrammen (CGH) ausgeglichen werden.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin. Sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Bei einem beispielhaften Messwertgeber ist vorgesehen, dass die Sende- / Empfangseinheit zumindest eine Lichtquelle mit einer Mehrzahl von in einer Reihe angeordneten Emittern umfasst. Bei einer solchen zeilenförmigen Anordnung aller Emitter einer Lichtquelle kommt eine radiale oder eine tangentiale Ausrichtung zu einer Absolut- und/oder Inkrementalspur als Maßverkörperung in Betracht. Die damit jeweils verbundenen Möglichkeiten und Vorteile sind weiter unten beschrieben.

Bei einer erfindungsgemäßen Ausführungsform des Messwertgebers ist vorgesehen, dass die Sende- / Empfangseinheit zumindest eine Lichtquelle mit einer Mehrzahl von in einer matrixförmigen Struktur angeordneten Emittern umfasst. Die mit der matrixförmigen Struktur einhergehende, erhöhte Anzahl der von der Lichtquelle umfassten Emitter eröffnet zusätzliche Möglichkeiten hinsichtlich der Dauer der Verwendbarkeit des Messwertgebers, weil bei einem alterungsbedingten Ausfall einzelner Emitter schlicht eine größere Anzahl alternativ verwendbarer Emitter zur Kompensation eines ausgefallenen Emitters oder ausgefallener Emitter zur Verfügung steht. Des Weiteren eröffnen sich durch eine flächige Struktur einer solchen Lichtquelle mit in einer matrixförmigen Struktur angeordneten Emittern auch besondere Möglichkeiten, wenn es um eine Kompensation einer ungünstigen oder fehlerhaften Orientierung der Lichtquelle und/oder des Detektors zur jeweils abgetasteten Maßverkörperung geht. Dazu sind Details ebenfalls weiter unten beschrieben.

Bei einem Verfahren zum Betrieb eines Messwertgebers mit einer Lichtquelle und mehrere innerhalb der Lichtquelle gleichzeitig aktivierbarer Emitter ist - unabhängig von einer eventuellen zeilenförmigen oder matrixartigen Anordnung - vorgesehen, dass zum Erhalt einer vorgegebenen oder vorgebbaren minimalen Signalleistung automatisch mehrere Emitter gleichzeitig aktiviert werden. Die gleichzeitige Aktivierung mehrerer Emitter kann dabei insofern automatisch erfolgen als regelmäßig - und ebenfalls automatisch - eine Signalleistung der im Betrieb aufgenommenen Bilder erfasst und mit einem vorgegebenen oder vorgebbaren Schwellwert verglichen wird. Bei Unterschreiten des Schwellwerts wird automatisch - nämlich zum Beispiel durch eine vom Messwertgeber umfasste Steuerungselektronik - zumindest ein weiterer Emitter aktiviert. Dabei kommt gegebenenfalls auch ein Betrieb einzelner Emitter mit einer verminderten Leistung in Betracht, so dass zum Beispiel bei einer den Schwellwert unterschreitenden Signalleistung ein bereits aktiver Emitter in Betrieb bleibt und ein weiterer Emitter mit zum Beispiel halber Leistung zusätzlich aktiviert wird. Eine automatisch von der Steuerungselektronik getroffene Auswahl eines zusätzlichen Emitters oder mehrerer zusätzlicher Emitter hängt zumindest zum Teil von einer Position solcher zusätzlich aktivierbarer Emitter innerhalb der Lichtquelle und/oder in Relation zu dem oder jedem bereits in Betrieb befindlichen Emitter ab. Grundsätzlich kommen alle dabei denkbaren geometrischen Muster in Betracht, wenn man eine Gruppe gleichzeitig aktiver Emitter und deren Position zueinander als Muster auffassen will.

Bei einer Ausführungsform eines Verfahrens zum Betrieb eines Messwertgebers wie hier und nachfolgend beschrieben ist vorgesehen, dass automatisch bei einem Ausfall oder einem bevorstehenden Ausfall eines Emitters entweder dieser deaktiviert und an dessen Stelle zumindest ein anderer Emitter aktiviert wird oder dieser aktiviert bleibt und zusätzlich ein anderer Emitter aktiviert wird. Die von der Lichtquelle umfassten Emitter werden dann als redundanter Ersatz oder redundante Ergänzung ausgefallener, ausfallender oder nicht mehr ausreichend strahlender Emitter verwendet.

Bei einer weiteren Ausführungsform eines Verfahrens zum Betrieb eines Messwertgebers wie hier und nachfolgend beschrieben ist zusätzlich vorgesehen, dass automatisch - also zum Beispiel durch eine vom Messwertgeber umfasste Steuerungselektronik - sukzessive einzelne Emitter oder Gruppen von Emittern aktiviert und resultierende, von einem Detektor des Messwertgebers erfasste Bilder ausgewertet werden, um einen bestmöglichen Emitter oder eine Gruppe bestmöglicher Emitter zu identifizieren und anschließend zu aktivieren. Bei einer Lichtquelle mit einer Mehrzahl von Emittern kann auf diese Weise automatisch ein zur Abtastung der Maßverkörperung bestmöglich geeigneter Emitter oder eine Gruppe bestmöglich geeigneter Emitter identifiziert und anschließend aktiviert werden. Ein solcher Prozess kann im Anschluss an eine Montage des Messwertgebers und als Teil einer Inbetriebnahme ausgelöst werden. Der Prozess selbst kann unter Kontrolle von zum Beispiel der Steuerungselektronik automatisch ablaufen und der oder jeder im Rahmen eines solchen Prozesses identifizierte Emitter wird gespeichert, so dass zum Abschluss des Identifikationsprozesses dessen bzw. deren automatische Aktivierung erfolgen kann.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Das oder jedes Ausführungsbeispiel ist nicht als Einschränkung der Erfindung zu verstehen. Vielmehr sind im Rahmen der vorliegenden Offenbarung Abänderungen und Modifikationen möglich, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

Es zeigen
- FIG 1: einen Messwertgeber zum Erhalt einer Positionsinformation, wobei der Messwertgeber eine Sende- und Empfangseinheit und diese wiederum eine Lichtquelle umfasst,
- FIG 2: eine Lichtquelle mit einer Mehrzahl von Laserdioden (Emittern), die jeweils in einer Reihe angeordnet sind,
- FIG 3: eine Lichtquelle mit einer Mehrzahl von Laserdioden (Emittern), die jeweils in einer Matrix angeordnet sind,
- FIG 4: ein Beispiel für eine Orientierung einer Lichtquelle mit einer Mehrzahl zeilenförmig angeordneter Emitter (FIG 2) in Relation zu einer auf einer drehbaren Scheibe angebrachten Maßverkörperung (radiale Orientierung),
- FIG 5: ein Beispiel für eine Orientierung einer Lichtquelle mit einer Mehrzahl zeilenförmig angeordneter Emitter (FIG 2) in Relation zu einer auf einer drehbaren Scheibe angebrachten Maßverkörperung (tangentiale Orientierung),
- FIG 6: ein Beispiel für eine Orientierung einer Lichtquelle mit einer Mehrzahl matrixförmig angeordneter Emitter (FIG 3) in Relation zu einer auf einer drehbaren Scheibe angebrachten Maßverkörperung,
- FIG 7: ein aufgrund einer gleichzeitigen Aktivierung von zumindest zwei Emittern resultierendes Bild bei einer Abtastung einer Absolutspur als Maßverkörperung,
- FIG 8: ein aufgrund einer gleichzeitigen Aktivierung von zumindest zwei Emittern resultierendes Bild bei einer Abtastung einer Inkrementalspur als Maßverkörperung und
- FIG 9: eine Gegenüberstellung resultierender Signalleistungen, einmal bei einer Aktivierung genau eines Emitters und einmal bei einer Aktivierung von zumindest zwei Emittern, in Abhängigkeit von der Temperatur.

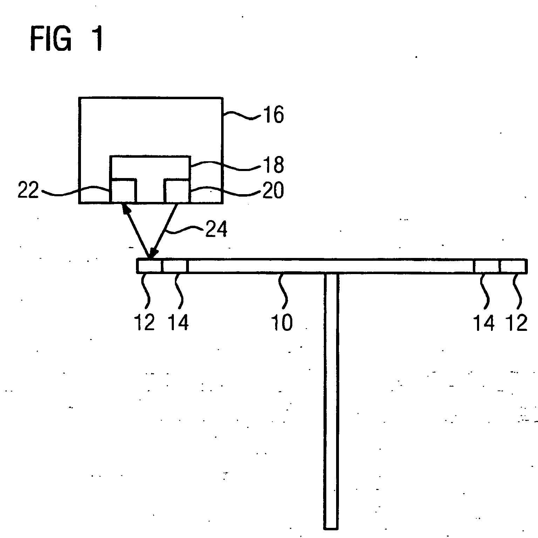

FIG 1 zeigt schematisch vereinfacht eine drehbare Scheibe 10 mit einer Maßverkörperung. Als Maßverkörperung sind - ebenfalls nur schematisch vereinfacht - jeweils eine konzentrisch mit einer Außenumfangslinie der Scheibe 10 angebrachte Absolutspur 12 und eine ebenso positionierte Inkrementalspur 14 gezeigt. Die Maßverkörperung, also die Absolutspur 12 und/oder die Inkrementalspur 14, wird mit einem hier und im Folgenden auch nur kurz als Messwertgeber 16 bezeichneten Messwertgeber zum Erhalt einer Positionsinformation abgetastet. Gezeigt ist dies für eine Abtastung der Absolutspur 12.

Der Messwertgeber 16 umfasst zum Erhalt einer Positionsinformation eine Sende- Empfangseinheit 18 (OPU). Mit dieser wird die jeweilige Maßverkörperung 12, 14 abgetastet. Dazu umfasst die Sende- / Empfangseinheit 18 zumindest eine Lichtquelle 20, also zum Beispiel einen VCSEL-Chip, zum Erzeugen eines Abtaststrahls 22, also insbesondere zum Erzeugen eines Laserstrahls, sowie zumindest einen Detektor 22 zum Erfassen eines sich aufgrund einer Reflektion oder Transmission eines von der Lichtquelle 20 ausgehenden Abtaststrahls 24 ergebenden optischen Codes. Dargestellt ist die Erfassung des optischen Codes hier für den Fall einer Reflektion an der jeweiligen Maßverkörperung, hier also der Absolutspur 12.

Die drehbare Scheibe 10 ist nur ein Beispiel, wie sich mit einem Messwertgeber 16 eine Positionsinformation, hier eine Positionsinformation hinsichtlich der Rotationslage der Scheibe 10, erhalten lässt. Eine solche Scheibe 10 kann einem Antrieb (nicht dargestellt) und dort zum Beispiel einer Motorachse zugeordnet sein, um eine Drehzahl oder Rotationslage der Motorachse zu erfassen. Eine Scheibe 10 ist darüber hinaus auch nur ein Beispiel für einen Anbringungsort einer Maßverkörperung. Grundsätzlich könnte die Maßverkörperung zum Beispiel bei einem Antrieb auch direkt an der jeweils überwachten Achse, also zum Beispiel der Motorachse, angebracht sein.

Die Darstellung in FIG 1 ist dementsprechend vor allem im Hinblick auf zeichnerisch einfach darstellbare und damit übersichtliche Verhältnisse gewählt. Dabei ist speziell auch kein Augenmerk auf eine auch nur annähernd größenrichtige Darstellung von Absolut- und Inkrementalspur 12, 14 im Verhältnis zum Messwertgeber 16 und dessen Sende- / Empfangseinheit 18 gelegt und es sind auch eine gleichzeitige Abtastung von Absolut- und Inkrementalspur 12, 14 und eine gleichzeitige Erfassung eines Bildes einer resultierenden Reflektion oder Transmission möglich. Schließlich sind auch Maßverkörperungen und deren Abtastung möglich und sinnvoll, die nur eine Absolutspur 12 oder nur eine Inkrementalspur 14 aufweisen.

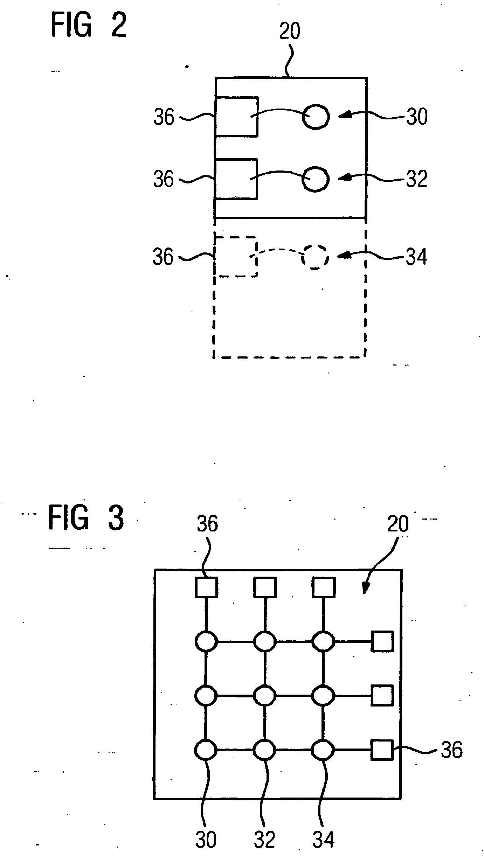

FIG 2 und FIG 3 zeigen unterschiedliche Ausführungsformen einer Lichtquelle 20 (vgl. auch FIG 1), also zum Beispiel eines VCSEL-Chips, mit einer Mehrzahl von jeweils zum Aussenden eines Abtaststrahls 24 (FIG 1) vorgesehenen Emittern 30, 32, 34, bei denen jeder Einzelne für sich genommen als Lichtquelle fungiert, alle aber von einer insgesamt als Lichtquelle 20 bezeichneten Einheit umfasst sind. Die dargestellte Lichtquelle 20 umfasst einen ersten und einen zweiten Emitter 30, 32 sowie optional weitere Emitter 34, wobei die tatsächliche Anzahl der Emitter 30-34 grundsätzlich beliebig ist. Die Darstellung der Lichtquelle 20 umfasst auch zum Anschluss der Emitter 30-34 vorgesehene Bondflächen 36.

Während FIG 2 eine Lichtquelle 20 mit zeilenförmig angeordneten Emittern 30-34 zeigt, ist in FIG 3 eine Lichtquelle 20 mit matrixförmig angeordneten Emittern 30-34 dargestellt. Die darstellte 3x3-Struktur ist willkürlich und anstelle der bei einer solchen Struktur resultierenden Anzahl von insgesamt neun Emittern 30-34 (nur einzelne bezeichnet) kann auch eine Lichtquelle 20 mit mehr oder weniger Emittern 30-34 und auch mit einer ungleichen Anzahl von Zeilen und Spalten in der matrixförmigen Struktur zur Anwendung kommen.

Die Lichtquelle 20 in FIG 2 kann bei Verwendung eines VCSEL-Chips auch als VCSEL-Zeile bezeichnet werden. Eine entsprechende Lichtquelle 20 mit einer Struktur wie in FIG 3 gezeigt kann entsprechend als VCSEL-Array bezeichnet werden.

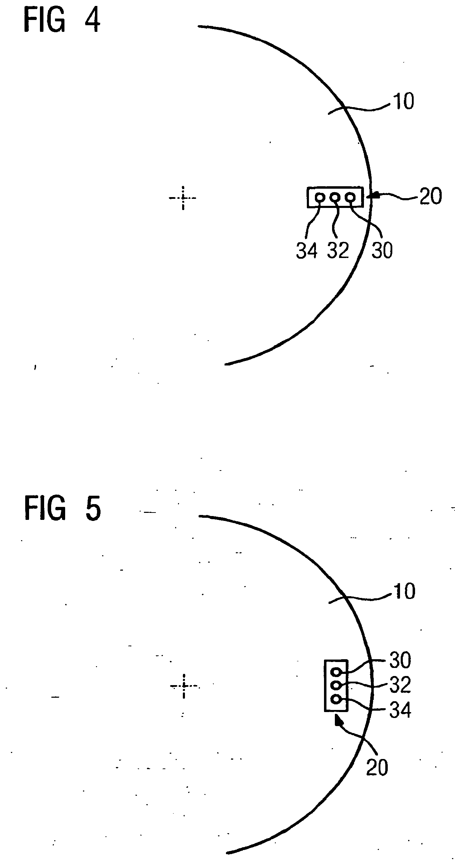

- Die Darstellung in FIG 4, FIG 5 und FIG 6 zeigt unterschiedliche Anbringungsarten einer Lichtquelle 20 in Bezug auf eine jeweils abzutastende Maßverkörperung, nämlich am Beispiel unterschiedlicher Ausrichtungen von VCSEL-Chips wie in FIG 2 und FIG 3 gezeigt in Relation zu einer auf einer drehbaren Scheibe 10 (vgl. auch FIG 1) angebrachten Maßverkörperung.

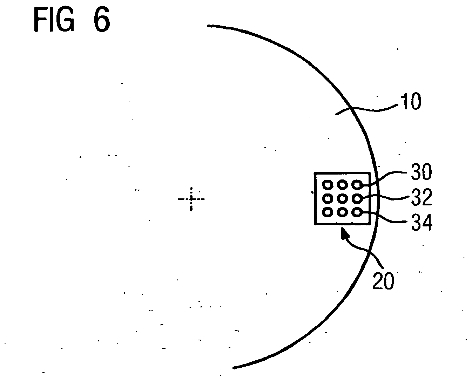

FIG 4 zeigt dabei eine radiale Ausrichtung der von der Lichtquelle 20 umfassten Emitter 30-34 in Bezug auf die konzentrisch mit einer Außenumfangslinie der Scheibe 10 aufgebrachte Maßverkörperung, also zum Beispiel eine Absolutspur 12 (FIG 1). FIG 5 zeigt eine radiale Ausrichtung der von der Lichtquelle 20 umfassten Emitter 30-34 in Bezug auf eine konzentrisch mit einer Außenumfangslinie der Scheibe 10 aufgebrachte Maßverkörperung. FIG 6 zeigt schließlich die Ausrichtung eines VCSEL-Arrays als Lichtquelle 20.

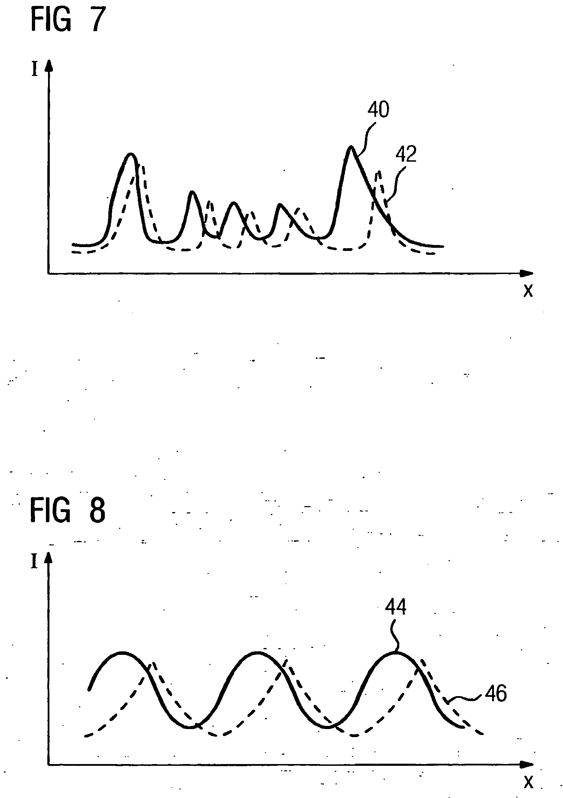

FIG 7 zeigt ein beim Abtasten einer Absolutspur 12 (FIG 1) resultierendes Absolutsignal 40 eines ersten Emitters 30 oder einer ersten Emittergruppe 30-34 und zum Vergleich ein Absolutsignal 42 eines anderen Emitters 32, 34 oder einer anderen Emittergruppe 30-34.

Die Darstellung in FIG 7 zeigt auch, dass definierte Emitter-Anordnungen (FIG 2 bis FIG 6) dafür genutzt werden können, um leicht verschobene Bitmuster (zum Beispiel Gray Codes oder dergleichen) auf dem Detektor 22 des Messwertgebers 10 abzubilden. Dafür unterscheiden sich die Emitter 30-34 von jeweils benachbart angebrachten Emittern 30-34 in ihrer räumlichen Lage um wenige 10µm. Diese Verschiebung lässt sich auf einem zum Auslesen einer Absolutspur 12 vorgesehenen Zeilendetektor (FIG 2, FIG 4, FIG 5) gut erfassen. Mithin eignet sich diese Information zur Bestimmung des im Einbauzustand im durch die Montage gegebenen Strahlengang bestmöglich abgebildeten Emitters. Die Auswahl des bestmöglich abgebildeten Emitters 30-34 richtet sich dabei nach vorgegebenen oder vorgebbaren Kriterien im Hinblick auf unterschiedliche aufgenommene Absolutsignale 40, 42. Eine Möglichkeit zur Auswahl eines bestmöglich abgebildeten Emitters 30-34 besteht demnach darin, denjenigen Emitter 30-34 auszuwählen, dessen Absolutsignal 40, 42 sich durch das höchste Maximum auszeichnet. Andere Kriterien könnten der größere Mittelwert aller Signalamplituden oder auch Parameter sein, welche eine Form der resultierenden Absolutsignale 40, 42 beschreiben.

Eine solche Auswahl eines bestmöglich abgebildeten Emitters 30-34 kann besonders günstig bei einer tangentialen Ausrichtung der Emitter 30-34 (FIG 4) erfolgen, weil bei einer solchen tangentialen Ausrichtung die Mehrzahl der Emitter 30-34 parallel (in Linie) zu einer Blende oder sonstigen Optik zur Erzeugung eines scharf begrenzten, spaltförmigen Laserspots orientiert sind. Eine mechanische Justierung ist dabei unter Umständen sogar unnötig, da sich in der Inbetriebnahme durch schrittweises Einschalten der Emitter 30-34 die Reihenfolge der Emitter und deren jeweilige Signalgüte ermitteln und abspeichern lässt.

Durch Anordnung in matrixähnlicher Form (FIG 3, FIG 6) wird sogar eine Fehljustierung eines als Detektor 22 fungierenden Zeilendetektors in Form einer Drehung ausgleichbar, indem zum Beispiel innerhalb der Matrix diagonal angeordnete Emitter 30-34 aktiviert werden. Mit angepassten Intensitäten der einzelnen Emitter 30-34 sind auch Zwischen-Emitter-Lagen, also definierte Winkellagen, einstellbar.

FIG 8 zeigt ein beim Abtasten einer Inkrementalspur 14 (FIG 1) resultierendes Inkrementalsignal 44 eines ersten Emitters 30 oder einer ersten Emittergruppe 30-34 und ein Inkrementalsignal 46 eines anderen Emitters 32, 34 oder einer anderen Emittergruppe 30-34.

Die Lage des oder jedes jeweils aktiven Emitters 30-34 zur im Sinus geformten Blende ist entscheidend für eine Signalgüte eines von einer Inkrementalspur 14 herrührenden Inkrementalsignals 44, 46. Eine optimale Filterung besteht dann, wenn eine bestmögliche tangentiale Ausrichtung von Emitter 30-34 oder Emittergruppe 30-34, Blende und Detektor 22 erreicht ist. Eine Erfüllung hier geltender enger Toleranzgrenzen kann durch eine quasi als Justierung eines resultierenden Laserspots fungierende Aktivierung einzelner oder mehrerer Emitter 30-34 erfolgen.

Zur Entscheidung, welcher der Emitter 30-34 oder welche Gruppe von Emittern 30-34 zu einer bestmöglichen Abbildung führt, wird die Form der resultierenden Inkrementalsignale 44, 46 verglichen. In der Darstellung in FIG 8 ist dabei als resultierendes Inkrementalsignal 44 eines ersten Emitters 30 oder einer ersten Emittergruppe 30-34 ein im Wesentlichen sinusförmiges Signal gezeigt. Demgegenüber ist als Inkrementalsignal 46 eines anderen Emitters 32, 34 oder einer anderen Emittergruppe 30-34 ein im Vergleich zu einem sinusförmigen Signal verzerrtes Signal dargestellt. Bei einer Bewertung der Form der resultierenden Inkrementalsignale 44, 46 würde das als resultierendes Inkrementalsignal 44 eines ersten Emitters 30 oder einer ersten Emittergruppe 30-34 gezeigte Signal als bestmögliches Signal und der signalauslösende erste Emitter 30 oder die signalauslösende erste Emittergruppe 30-34 ausgewählt. Zur Bewertung einer Form der resultierenden Inkrementalsignale 44, 46 können geeignete Kriterien hinterlegt sein.

Hier kommt zum Beispiel in Betracht, eine Stetigkeit der resultierenden Inkrementalsignale 44, 46 oder eine erste Ableitung der resultierenden Inkrementalsignale 44, 46 zu untersuchen.

Bei der Inbetriebnahme kann zudem die resultierende Signalform (Inkrementalsignal 44, 46) der nächstbesten Emitter 30-34 für die Inkrementalspur 14 mit abgelegt werden, entweder zur Korrektur nach Tabellen oder zur Signalisierung der damit erzielbaren eventuell reduzierten Inkrementalauflösung bei schlechter Signalform.

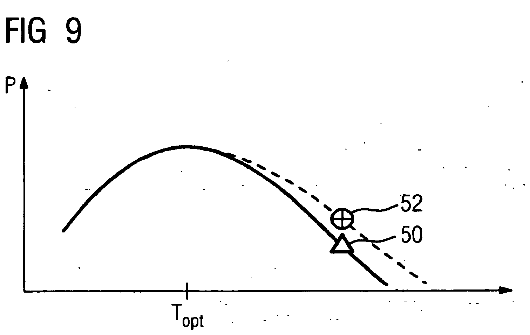

FIG 9 zeigt eine Kurve einer Signalleistung 50 bei Aktivierung genau eines Emitters 30-34 einer mehrere Emitter 30-34 umfassenden Lichtquelle 20. Im Vergleich dazu ist eine weitere Kurve einer Signalleistung 52 gezeigt, wie sie sich bei einer gleichzeitigen Aktivierung von zum Beispiel zwei Emittern 30-34 einer mehrere Emitter 30-34 umfassenden Lichtquelle 20 ergibt. Die Signalleistung ist dabei auf der Ordinate aufgetragen und die Kurven 50, 52 sind über einer symbolisch mit T bezeichneten Temperatur aufgetragen. Eine maximale Signalleistung ergibt sich dabei bei einer mit Tₒₚₜ bezeichneten optimalen Temperatur. Darüber hinaus erkennt man, dass die Signalleistung oberhalb der optimalen Temperatur Tₒₚₜ abnimmt. Durch die gleichzeitige Aktivierung mehrerer Emitter 30-34 einer Lichtquelle 20 lässt sich die Signalleistung auch im Bereich hoher Temperaturen erhöhen und damit eine ausreichende oder zumindest bessere Signalleistung erreichen.

Obwohl die Erfindung im Detail durch das Ausführungsbeispiel näher illustriert und beschrieben wurde, so ist die Erfindung nicht durch das oder die offenbarten Beispiele eingeschränkt und andere Variationen können vom Fachmann hieraus abgeleitet werden, ohne den Schutzumfang der Erfindung zu verlassen.

Die Zusammenfassung oder Integration mehrerer Laseremitter 30-34 hat Vorteile hinsichtlich der mechanischen Toleranz sowie Betriebssicherheit und setzt die detaillierte Kenntnis des optischen Wirkprinzips der diffraktiven Optik und des typischen Aufbaus binär codierter Encoder-Scheiben 10 im Zusammenspiel mit der Sende- Empfangseinheit (OPU) 18 voraus.

Eine solche Zusammenfassung mehrerer Emitter 30-34 kommt - wie oben im Zusammenhang mit FIG 9 erläutert - zur Behandlung einer Problematik in Betracht, die sich daraus ergibt, dass Laseremitter 30-34 temperaturempfindlich sind. Normalerweise sind Laseremitter nur für einen Betrieb in einem Temperaturbereich von bis zu 105 °C vorgesehen. Für viele Anwendungen ist dies jedoch nicht ausreichend und wünschenswert wäre ein Temperaturbereich von bis zu 120 °C.

Ein erhöhter Temperaturbereich wirkt sich allerdings nachteilig auf die Lebensdauer der Laseremitter 30-34 aus. Eine verringerte Lebensdauer kann jedoch dadurch kompensiert werden, dass jeweils eine Mehrzahl von Laseremittern 30-34 vorgesehen ist und dass bei einem alterungsbedingten Ausfall eines Laseremitters 30-34 an dessen Stelle ein anderer Laseremitter 30-34 oder eine Mehrzahl anderer Laseremitter 30-34 aktivierbar ist oder aktiviert wird.

Zudem führt eine Temperaturerhöhung auch zu einer Drift im Wellenlängenbereich. Die Drift im Wellenlängenbereich führt dazu, dass die Fokussierung des resultierenden Bildes (FIG 7, FIG 8) eventuell ungünstiger ist. Zusätzlich kann auch eine Intensität des resultierenden Bildes (FIG 7, FIG 8) im erwarteten Bereich ungünstiger sein (geringere Signalleistung; FIG 9). Diese Effekte verstärken sich zudem mit zunehmender Lebensdauer. Diese ungünstigen Effekte, also ungünstige Fokussierung, Wellenlängendrift, abnehmende Intensität, usw., lassen sich in signifikantem Umfang vermeiden, indem nicht nur ein Emitter 30-34 verwendet wird, sondern zwei oder mehr Emitter 30-34 oder eine Gruppe von Emittern 30-34.

Diese Emitter 30-34 können in unterschiedlicher Art und Weise geschaltet werden, so dass zum Beispiel eine Aktivierung eines zusätzlichen Emitters 30-34 erst dann erfolgt, wenn bei einer Auswertung eines aufgenommenen Bildes Abweichungen von einem erwarteten Szenario erkannt werden. Zusätzlich oder alternativ besteht die Möglichkeit, zeitabhängig, also quasi lebensdauerabhängig, ab einer bestimmten Betriebsdauer eines Emitters 30-34 zusätzlich oder alternativ einen anderen Emitter 30-34 zu aktivieren.

Ansonsten besteht die Möglichkeit, bei einer Lichtquelle 20 mit einer matrixartigen Anordnung von Emittern 30-34 diese so zu aktivieren, dass sich ein maximaler Unterstützungseffekt und ein optimal ausgerichteter Laserspot sowie aufgrund dessen ein optimales Bild ergeben. Eine optimale Ausrichtung ist dabei eine radiale Ausrichtung (FIG 4), die sich natürlich mit einer optimal ausgerichteten Lichtquelle 20 mit einer Mehrzahl von in einer Reihe angeordneten Emittern 30-34 (FIG 2) erreichen lässt, aber auch mit einer Lichtquelle 20 mit einer Mehrzahl matrixartig angeordneter Emitter 30-34 (FIG 3), bei welcher einzelne Emitter 30-34 so aktiviert werden, dass die Überlagerung der einzelnen Laserspots eines jeden Emitters 30-34 in Summe zu einem optimal radial ausgerichteten Laserspot führt.

Bei einer tangentialen Ausrichtung einer Lichtquelle 20 mit in einer Reihe angeordneten Emittern 30-34 (FIG 2) ergeben sich bei einer gleichzeitigen Aktivierung von zum Beispiel drei Emittern 30-34 auch drei resultierende Bilder. Diese können aber unterschiedlich deutlich / intensiv sein, zum Beispiel weil einer der Emitter 30-34 zur Maßverkörperung ungünstig positioniert ist. Unterschiede in der Intensität können aber auch darauf hindeuten, dass der jeweilige Emitter 30-34 sich dem Ende seiner Lebensdauer nähert und die Intensität deshalb reduziert ist. Solche Beobachtungen lassen sich also automatisch dahingehend auswerten, dass bei einem Bild, welches vorgegebene oder vorgebbare Kriterien (Intensität, Signalamplitude, etc.) nicht erfüllt, der entsprechende Emitter 30-34 automatisch deaktiviert wird. Auf diese Weise wäre eine Funktionsprüfung einer mehrere Emitter 30-34 umfassenden Lichtquelle 20 möglich.

Einzelne im Vordergrund stehende Aspekte der hier eingereichten Beschreibung lassen sich damit kurz wie folgt zusammenfassen:
Angegeben wird zuvorderst ein Messwertgeber 16 zum Erhalt einer Positionsinformation, wobei der Messwertgeber 16 eine Sende- / Empfangseinheit 18 zur Abtastung einer Maßverkörperung umfasst und wobei die Sende- / Empfangseinheit 18 eine Mehrzahl von Lichtquellen, insbesondere zumindest eine Lichtquelle 20 mit einer Mehrzahl von Emittern 30, 32, 34, nämlich zum Beispiel Laserdioden, insbesondere VCSEL Emitter, umfasst.

## Patentansprüche

1. Messwertgeber (16) zum Erhalt einer Positionsinformation, wobei der Messwertgeber (16) eine Sende- / Empfangseinheit (18) zur Abtastung einer Maßverkörperung umfasst, wobei die Sende- / Empfangseinheit (18) zumindest eine Lichtquelle (20) mit einer Mehrzahl von in einer Reihe angeordneten, redundanten Emittern (30, 32, 34) umfasst, wobei einzelne oder mehrere Emitter (30-34) automatisch anstelle einzelner oder mehrerer anderer Emitter (30-34) aktivierbar sind und wobei die Sende- / Empfangseinheit (18) zumindest eine Lichtquelle (20) mit einer Mehrzahl von in einer matrixförmigen Struktur angeordneten Emittern (30, 32, 34) umfasst.

2. Messwertgeber (16) nach Anspruch 1,
wobei mehrere Emitter (30-34) gleichzeitig aktivierbar sind.

3. Verfahren zum Betrieb eines Messwertgebers (16) nach einem der vorangehenden Ansprüche, wobei automatisch bei einem Ausfall oder einem bevorstehenden Ausfall eines Emitters (30-34) entweder dieser deaktiviert und an dessen Stelle zumindest ein anderer Emitter (30-34) aktiviert wird oder dieser aktiviert bleibt und zusätzlich ein anderer Emitter (30-34) aktiviert wird.

4. Verfahren nach Anspruch 3, wobei zum Erhalt einer vorgegebenen oder vorgebbaren minimalen Signalleistung mehrere Emitter (30-34) gleichzeitig aktiviert werden.

5. Verfahren zum Betrieb eines Messwertgebers (16) nach einem der Ansprüche 3 oder 4, wobei automatisch sukzessive einzelne Emitter (30-34) oder Gruppen von Emittern (30-34) aktiviert und resultierende Bilder ausgewertet werden, um einen bestmöglichen Emitter (30-34) oder eine Gruppe bestmöglicher Emitter (30-34) zu identifizieren und anschließend zu aktivieren.

6. Verfahren nach Anspruch 5, wobei bei einem Vergleich resultierender Bilder automatisch deren maximale Signalamplituden verglichen werden und wobei ein zu einer maximalen Signalamplitude gehöriger Emitter (30-34) oder eine zu einer maximalen Signalamplitude gehörige Gruppe von Emittern (30-34) automatisch als bestmöglicher Emitter (30-34) oder als Gruppe bestmöglicher Emitter (30-34) identifiziert und anschließend aktiviert wird.

7. Verfahren nach Anspruch 5 oder 6, wobei bei einem Vergleich resultierender Bilder automatisch eine Abweichung einer jeweiligen Signalform von einer erwarteten Signalform ermittelt wird und wobei ein zu einer minimalen Abweichung von der erwarteten Signalform gehöriger Emitter (30-34) oder eine zu minimalen Abweichung von der erwarteten Signalform gehörige Gruppe von Emittern (30-34) automatisch als bestmöglicher Emitter (30-34) oder als Gruppe bestmöglicher Emitter (30-34) identifiziert und anschließend aktiviert wird.

## Claims

1. Measuring transducer (16) for obtaining position data, wherein the measuring transducer (16) contains a transmit/receive unit (18) for scanning a dimensional scale, wherein the transmit/receive unit (18) contains at least one light source (20) having a plurality of redundant emitters (30, 32, 34) arranged in a row, wherein individual or a plurality of emitters (30-34) can be automatically activated in place of individual emitters or a plurality of other emitters (30-34) and wherein the transmit/receive unit (18) contains at least one light source (20) having a plurality of emitters (30, 32, 34) arranged in a matrix-type structure.

2. Measuring transducer (16) according to claim 1, wherein a plurality of emitters (30-34) can be activated simultaneously.

3. Method for operating a measuring transducer (16) according to one of the preceding claims, wherein in the event of a failure or an imminent failure of one emitter (30-34) either this one emitter is automatically deactivated and at least one other emitter (30-34) is activated in its place, or this one emitter remains activated and another emitter (30-34) is activated in addition.

4. Method according to claim 3, wherein a plurality of emitters (30-34) is activated simultaneously in order to obtain a specified or a specifiable minimum signal power.

5. Method for operating a measuring transducer (16) according to claim 3 or 4, wherein successive individual emitters (30-34) or groups of emitters (30-34) are automatically activated and resulting images are evaluated in order to identify and then activate a best possible emitter (30-34) or a group of best possible emitters (30-34).

6. Method according to claim 5, wherein in a comparison of resulting images, their maximum signal amplitudes are automatically compared, and wherein an emitter (30-34) associated with a maximum signal amplitude or a group of emitters (30-34) associated with a maximum signal amplitude is automatically identified and then activated as the best possible emitter (30-34) or as a group of best possible emitters (30-34).

7. Method according to claim 5 or 6, wherein in a comparison of resulting images a deviation of a respective signal waveform from an expected signal waveform is automatically determined, and wherein an emitter (30-34) associated with a minimum deviation from the expected signal waveform, or a group of emitters (30-34) associated with a minimum deviation from the expected signal waveform is automatically identified and then activated as the best possible emitter (30-34) or as a group of best possible emitters (30-34).

## Revendications

1. Transmetteur (16) de valeurs de mesure pour l'obtention d'une information de position, le transmetteur (16) de valeurs de mesure comprenant une unité (18) d'émission/réception pour l'analyse d'une représentation d'une grandeur, dans lequel l'unité (18) d'émission/réception comprend au moins une source (20) lumineuse ayant une multiplicité d'émetteurs (30, 32, 34) redondants disposés suivant une rangée et dans lequel des émetteurs (30 à 34) individuels ou plusieurs émetteurs (30 à 34) peuvent être activés automatiquement au lieu d'un autre émetteur (30 à 34) individuel ou de plusieurs autres émetteurs (30 à 34) et dans lequel l'unité (18) d'émission/réception comprend au moins une source (20) lumineuse ayant une multiplicité d'émetteurs (30, 32, 34) disposés suivant une structure en forme de matrice.

2. Transmetteur (16) de valeurs de mesure suivant la revendication 1, dans lequel plusieurs émetteurs (30 à 34) peuvent être activés en même temps.

3. Procédé pour faire fonctionner un transmetteur (16) de valeurs de mesure suivant l'une des revendications précédentes, dans lequel, lors d'une panne ou de l'imminence d'une panne d'un émetteur (30 à 34), celui-ci est désactivé et à sa place au moins un autre émetteur (30 à 34) est activé ou il reste activé et en plus un autre émetteur (30 à 34) est activé.

4. Procédé suivant la revendication 3, dans lequel, pour l'obtention d'une puissance de signal minimale donnée à l'avance ou pouvant l'être, plusieurs émetteurs (30 à 34) sont activés en même temps.

5. Procédé pour faire fonctionner un transmetteur (16) de valeurs de mesure suivant l'une des revendications 3 ou 4, dans lequel des émetteurs (30 à 34) individuels ou des groupes d'émetteurs (30 à 34) successifs sont activés automatiquement et les images qui s'ensuivent sont exploitées pour identifier un émetteur (30 à 34) le meilleur possible ou un groupe d'émetteurs (30 à 34) le meilleur possible et l'activer ensuite.

6. Procédé suivant la revendication 5, dans lequel, lors d'une comparaison entre des images obtenues, on compare automatiquement leur amplitude maximale de signal et dans lequel on identifie un émetteur (30 à 34), appartenant à une amplitude de signal maximale ou un groupe d'émetteurs (30 à 34) appartenant à une amplitude de signal maximale, automatiquement comme émetteur (30 à 34) le meilleur possible ou comme groupe d'émetteurs (30 à 34) le meilleur possible et ensuite on l'active.

7. Procédé suivant la revendication 5 ou 6, dans lequel, lorsque l'on compare des images obtenues, on détermine automatiquement un écart d'une forme de signal respective à une forme de signal escomptée et dans lequel on identifie un émetteur (30 à 34), appartenant à un écart minimum à la forme de signal escomptée ou un groupe d'émetteurs (30 à 34) appartenant à un écart minimum à la forme de signal escomptée, automatiquement comme émetteur (30 à 34) le meilleur possible ou comme groupe d'émetteurs (30 à 34) le meilleur possible et ensuite on l'active.
